# EUROPEAN PATENT APPLICATION

(11) **EP 4 579 122 A1**
(43) Date of publication of application: **02.07.2025**
(21) Application number: 22956620.3
(22) Date of filing: 20.12.2022
(51) Int. Cl.: F17C 13/06, F17C 13/00, F17C 1/00, B29C 45/14

(54) **BOSS ASSEMBLY, GAS STORAGE CONTAINER, AND BOSS ASSEMBLY MANUFACTURING METHOD**

(30) Priority: 25.08.2022 KR 20220106842
(71) Applicant: Samki Industrial Co., Ltd, Ulsan 44776 (KR); Dong Hee Industrial Co., Ltd., Ulsan 44784 (KR)
(72) Inventor: PARK, Hwansung, Hwaseong-si, Gyeonggi-do 18480 (KR); PARK, Kyunbum, Hwaseong-si, Gyeonggi-do 18429 (KR); CHO, Hyungjoo, Ansan-si, Gyeonggi-do 15541 (KR); SON, Subin, Suwon-si, Gyeonggi-do 16679 (KR); CHOI, Byongsuk, Ulju-gun, Ulsan 44959 (KR); KO, Doseok, Ulju-gun, Ulsan 44959 (KR); CHO, Hyunduck, Ulju-gun, Ulsan 44959 (KR); CHOI, Hanho, Ulsan 44478 (KR); KIM, Jinhyeon, Ulsan 44225 (KR)
(74) Representative: Gulde & Partner
(86) International application number: PCT/KR2022/020778
(87) International publication number: WO 2024/043415

(57) **Abstract**

A boss assembly coupled to an opening of a liner of a gas storage container along a longitudinal axis of the gas storage container, is provided to include: a main body made of a metal material, having a first gas inlet/outlet extending along the longitudinal axis; a flange member made of a resin material, coupled to the main body, having a second gas inlet/outlet arranged on the longitudinal axis to communicate with the first gas inlet/outlet and a flange coupling portion joined to the liner; and a concave-convex engagement portion including an interlocking groove formed in an arc shape on the main body and an interlocking rib, formed on the flange member, inserted into and engaged with the interlocking groove.

## Description

### [TECHNICAL FIELD]

The present invention relates to a boss assembly coupled to a liner, a gas storage container including the boss assembly, and a method for manufacturing the boss assembly. More specifically, it concerns a boss assembly, a gas storage container, and a method for manufacturing the boss assembly, which are related to a structure that prevents gas leakage from the interior of the liner when the boss assembly is coupled to the liner.

### [BACKGROUND ART]

The gas storage container is a cylindrical container that stores gas inside and is applied in various fields requiring gas. One example of such a field is the fuel cell system of a hydrogen vehicle. A fuel cell system includes a fuel cell stack that generates electrical energy, a fuel supply system that supplies hydrogen as fuel to the fuel cell stack, an air supply system that supplies oxygen from the air as an oxidant necessary for the electrochemical reaction in the fuel cell stack, and a management system that controls the operating temperature of the fuel cell stack. The gas storage container used in the fuel supply system, specifically the hydrogen supply system, stores compressed hydrogen at a high pressure of 700 bar or more. This stored compressed hydrogen is released into a high-pressure line according to the on/off operation of a high-pressure regulator installed at the inlet of the gas storage container. It is then depressurized as it passes through a start valve and a hydrogen supply valve before being delivered to the fuel cell stack.

At this time, since gases such as hydrogen have a low storage density, it is efficient to store them under high pressure in the gas storage container. In particular, because the installation space for the gas storage container in hydrogen vehicles is limited, the storage pressure must be maintained at a high level. However, considering the risk of explosion due to high pressure, ensuring the safety of the gas storage container is extremely important. For this reason, various types of reinforcing materials can be applied to the liner, which forms the body of the gas storage container, to withstand the high internal pressure of hydrogen.

Meanwhile, the boss assembly, which forms the hydrogen inlet and outlet of the liner, is manufactured separately from the liner and then assembled onto it. Traditionally, hydrogen tightness has been maintained by interposing sealing components such as O-rings and backup rings between the boss assembly and the liner. However, this method requires the separate production of sealing components in addition to the main component, the boss assembly, and their subsequent assembly, making the process more complex and inevitably leading to increased labor and costs. Furthermore, under extreme conditions, the sealing components inevitably experience a decline in sealing performance over time, necessitating periodic replacement.

### [TECHNICAL PROBLEM]

The present invention has been devised in consideration of the aforementioned issues, aiming to provide a boss assembly with a simple structure that prevents the leakage of high-pressure gas from inside the liner, as well as a gas storage container incorporating this boss assembly.

### [TECHNICAL SOLUTION]

To achieve the above objective, a boss assembly coupled to an opening of a liner of a gas storage container along a longitudinal axis of the gas storage container, is provided to include: a main body made of a metal material, having a first gas inlet/outlet extending along the longitudinal axis; a flange member made of a resin material, coupled to the main body, having a second gas inlet/outlet arranged on the longitudinal axis to communicate with the first gas inlet/outlet and a flange coupling portion joined to the liner; and a concave-convex engagement portion including an interlocking groove formed in an arc shape on the main body and an interlocking rib, formed on the flange member, inserted into and engaged with the interlocking groove. Thus, a boss assembly with improved dissimilar material bonding strength between the main body and the flange member, which are made of different materials, is provided, and a gas storage container that prevents gas leakage can be offered.

Also, the interlocking groove may have a dovetail-shaped cross-section, a width of which expands in a depth direction of the main body. This enhances the bonding strength between the main body and the flange member.

Also, a side edge of the cross-section of the interlocking groove may extend at an angle in a range of 20 degrees to 40 degrees relative to an axis of the depth direction. This not only strengthens the bond between the main body and the flange member but also prevents the formation of areas where the resin fails to spread properly during the injection molding process.

Additionally, a gas storage container according to an embodiment of the present invention includes: a liner having an opening provided on one side along a longitudinal axis; and a boss assembly coupled to the opening of the liner, wherein the boss assembly includes: a main body made of a metal material, having a first gas inlet/outlet extending along the longitudinal axis; a flange member made of a resin material, coupled to the main body, having a second gas inlet/outlet arranged on the longitudinal axis to communicate with the first gas inlet/outlet and a flange coupling portion joined to the liner; and a concave-convex engagement portion including an interlocking groove formed in an arc shape on the main body and an interlocking rib, formed on the flange member, inserted into and engaged with the interlocking groove. Thus, a boss assembly with improved dissimilar material bonding strength between the main body and the flange member, which are made of different materials, is provided, and a gas storage container that prevents gas leakage can be offered.

Additionally, a method for manufacturing a boss assembly coupled to an opening of a liner of a gas storage container along a longitudinal axis of the gas storage container according to an embodiment of the present invention, the method includes: forming a main body by processing a metal to have a first gas inlet/outlet extending along the longitudinal axis; preheating the main body at a temperature range of 140°C to 160°C and placing the preheated main body into an injection cavity of a mold; and injecting a resin into the injection cavity of the mold to form a flange member, which is coupled to the main body and has a second gas inlet/outlet arranged on the longitudinal axis to communicate with the first gas inlet/outlet. Thus, a boss assembly with improved dissimilar material bonding strength between the main body and the flange member, which are made of different materials, is provided, and a gas storage container that prevents gas leakage can be provided.

Also, the metal may include aluminum, and the resin may include PA6 (Polyamide 6). This enables the provision of a gas storage container with excellent physical and chemical properties.

Also, the preheating temperature range of the main body may be set to be 30% to 40% lower than the melting point of the resin. This enhances the bonding strength between the main body and the flange member during the injection molding process and prevents gas leakage.

Additionally, a manufacturing apparatus for a boss assembly of a gas storage container, which is coupled to an opening of a liner of the gas storage container along a longitudinal axis of the gas storage container according to an embodiment of the present invention, the manufacturing apparatus includes: a mold having an injection cavity; a heater; and a controller configured to control the heater to preheat a main body, which is made of a metal material and has a first gas inlet/outlet extending along the longitudinal axis, at a temperature range of 140°C to 160°C, place the preheated main body into the injection cavity of the mold and inject resin into the injection cavity to form a flange member, which is bonded to the main body and has a second gas inlet/outlet arranged on the longitudinal axis to communicate with the first gas inlet/outlet. Thus, a boss assembly with improved dissimilar material bonding strength between the main body and the flange member, which are made of different materials, and a gas storage container that prevents gas leakage can be manufactured.

### [ADVANTAGEOUS EFFECTS]

According to the present invention, a boss assembly with a simple structure can be provided to prevent gas leakage between the liner and the boss assembly, along with a gas storage container incorporating this boss assembly.

### [DESCRIPTION OF DRAWINGS]

FIG. 1 is a perspective view of the gas storage container.
FIG. 2 is a cross-sectional view of the gas storage container taken along the axial direction.
FIG. 3 is a plan view showing the lower surface of the main body of the boss assembly.
FIG. 4 is a sectional view of the concave-convex engagement portion.
FIG. 5 is a block diagram of the manufacturing apparatus for the boss assembly.
FIG. 6 is a flowchart illustrating the method of manufacturing the boss assembly using the manufacturing apparatus.

### [BEST MODE]

Hereinafter, embodiments of the present invention will be described in detail with reference to the accompanying drawings. Unless otherwise specified, the embodiments described with reference to the drawings are not mutually exclusive and may be selectively combined within a single device. The combination of multiple embodiments may be arbitrarily selected and applied by a person skilled in the technical field of the present invention to implement the inventive concept.

If terms including ordinal numbers, such as "first component" and "second component," are used in the embodiments, these terms are employed to describe various components and are intended to distinguish one component from another. These components are not limited in meaning by such terminology. The terms used in the embodiments are applied solely for the purpose of explaining the respective embodiments and do not limit the scope of the present invention.

Furthermore, when the expression "at least one" appears in this specification in reference to multiple components, it refers not only to all of the components collectively but also to each individual component excluding the others, as well as any combination thereof.

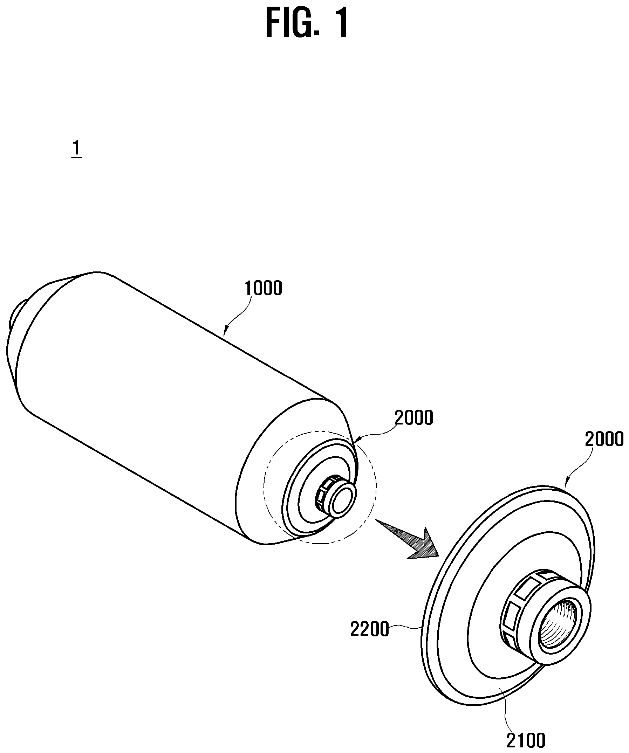

FIG. 1 is a perspective view of the gas storage container.

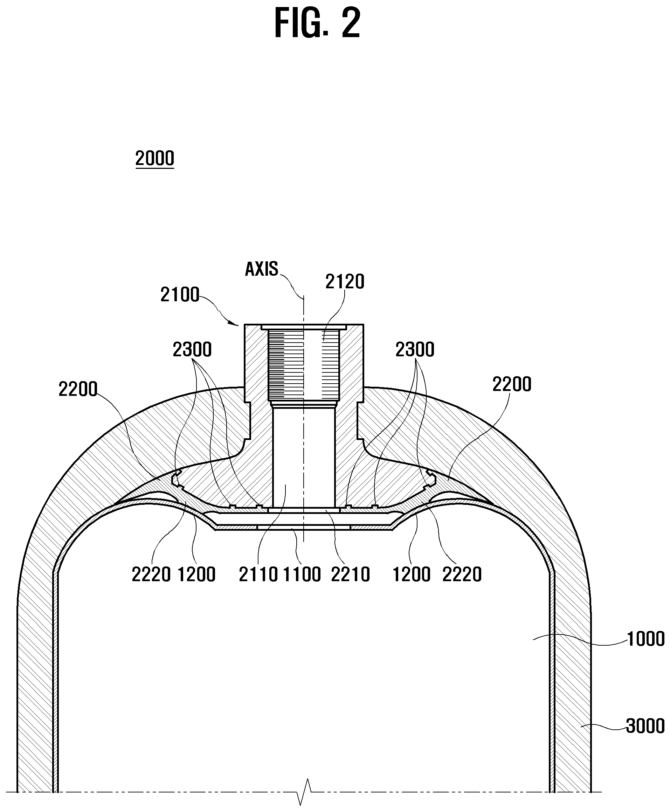

FIG. 2 is a cross-sectional view of the gas storage container taken along the axial direction.

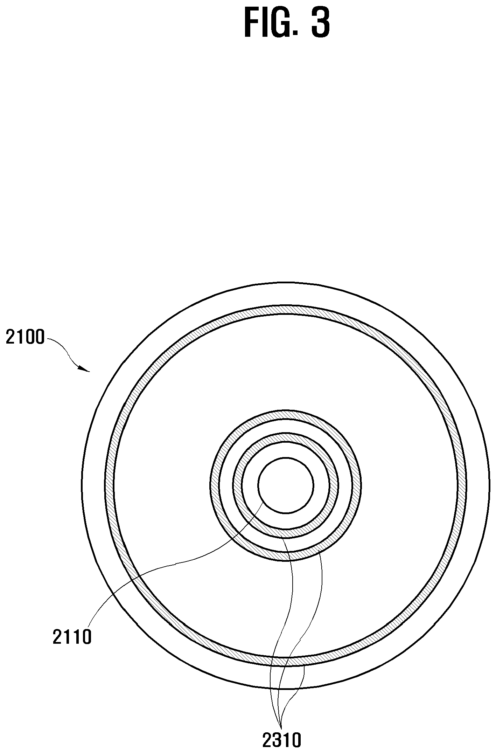

FIG. 3 is a plan view showing the lower surface of the main body of the boss assembly.

As shown in FIGS. 1 to 3, the gas storage container 1 has an elongated cylindrical shape centered around a predetermined longitudinal axis. The gas storage container 1 includes a storage space capable of storing gas, and an opening 1100 is formed on one side to communicate with the storage space. In this embodiment, the opening 1100 of the gas storage container 1 is positioned along the longitudinal axis; however, the opening 1100 is not necessarily required to be located on this axis. Through the opening 1100, gas can be introduced into the storage space or discharged from it. The application fields of the gas storage container 1 and the types of gas stored within it are not limited. As an example, the gas storage container 1 may be applied to hydrogen vehicles and configured to store high-pressure hydrogen at a pressure of at least 700 bar.

The gas storage container 1 includes a liner 1000. The liner 1000 forms the body or main structure of the gas storage container 1, and the previously mentioned storage space and opening 1100 of the gas storage container 1 are provided within the liner 1000. Since the liner 1000 is required to possess various properties such as durability, impact resistance, and fire resistance, it can be made from various materials to meet these requirements. For example, the liner 1000 may be manufactured from metal materials such as aluminum or steel. Alternatively, the liner 1000 may be made of metal and reinforced on its outer surface with a fiberglass composite material. In another example, as in the present embodiment, the liner 1000 may be made of non-metallic materials such as high-density plastic. Due to its relatively lightweight nature, a non-metallic liner 1000 is particularly suitable for application in gas storage containers 1 used in hydrogen vehicles.

The gas storage container 1 includes a boss assembly 2000. The boss assembly 2000 forms the gas inlet and outlet of the gas storage container 1 and is coupled to the liner 1000 in communication with the opening 1100, which is provided along the longitudinal axis of the liner 1000. The gas storage container 1 is manufactured by thermally welding the boss assembly 2000 to the liner 1000, after which the outer surfaces of both the boss assembly 2000 and the liner 1000 are reinforced by being wrapped together with a carbon fiber composite material 3000. Since the boss assembly 2000 is manufactured as a separate component from the liner 1000 before being assembled, a sealing structure is required to prevent high-pressure hydrogen from leaking out of the liner 1000.

The boss assembly 2000 includes a main body 2100 and a flange member 2200 coupled to the main body 2100. The main body 2100 and the flange member 2200 are made of different materials and form the boss assembly 2000 through a dissimilar material bonding process. The main body 2100 is made of a metal material, such as aluminum. The flange member 2200 is made of a resin material, such as PA6 (Polyamide 6). PA6 is a polyamide-based material that contains characteristic amide groups (NHCO) in its molecular chain and is produced through ring-opening polymerization using caprolactam. PA6 exhibits excellent properties, including high mechanical strength, heat resistance, chemical resistance, oil resistance, moldability, and wear resistance.

In this embodiment, the materials of the main body 2100 and the flange member 2200 are merely examples selected from various applicable metals or resins. Depending on the design approach, different types of metals or resins from those exemplified in this embodiment may be used. A more detailed description of the boss assembly 2000, as well as cases where different materials are applied to manufacture the boss assembly 2000, will be provided later.

The boss assembly 2000 is positioned over the liner 1000 to cover the opening 1100 of the liner 1000. The lower surface of the flange member 2200 of the boss assembly 2000 is thermally welded to a designated area 1200 on the upper surface of the liner 1000, thereby securing the boss assembly 2000 to the liner 1000. In this embodiment, the liner 1000 is made of the same PA6 material as the flange member 2200, allowing for thermal welding between them. Once the boss assembly 2000 and the liner 1000 are joined, their outer surfaces are wrapped with a carbon fiber composite material 3000, reinforcing the strength of the gas storage container 1. The material of the liner 1000 is not limited to PA6; it may be made of the same resin material as the flange member 2200 or, if different, a material with similar physical and chemical properties to the flange member 2200.

The boss assembly 2000 includes a main body 2100 made of metal and a flange member 2200 made of PA6, which is coupled to the main body 2100. The main body 2100 and the flange member 2200 are arranged along the longitudinal axis of the liner 1000 (hereinafter referred to as the "axis"). The main body 2100 and the flange member 2200 have a rotationally symmetrical shape, formed by rotating around the axis.

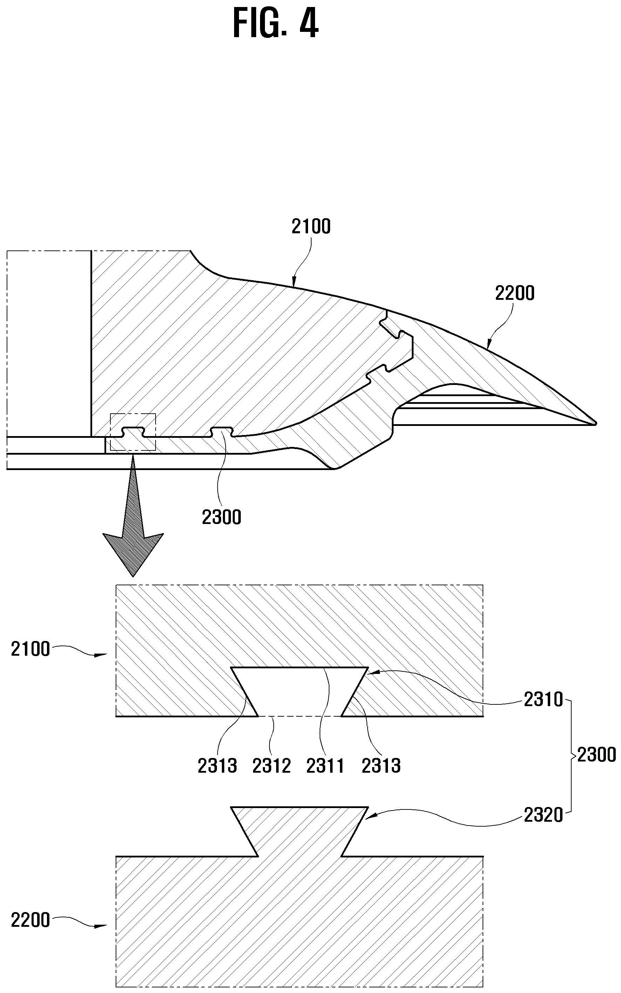

The main body 2100 has a first gas inlet/outlet 2110 extending along the axis. The first gas inlet/outlet 2110 includes a threaded section 2120 on a portion of its inner surface, allowing an external pipe, cap, or other component to be screwed in. The lower surface of the main body 2100 (as shown in FIG. 4), which faces the liner 1000 and is in contact with the upper surface of the flange member 2200, has a disc shape with the first gas inlet/outlet 2110 positioned at its center.

The flange member 2200 has a second gas inlet/outlet 2210 extending along the axis. The second gas inlet/outlet 2210 is in communication with the first gas inlet/outlet 2110 and the opening 1100 of the liner 1000, thereby forming the inlet and outlet of the gas storage container 1. The upper surface of the flange member 2200 is in contact with the lower surface of the main body 2100. The outer diameter (outermost perimeter) of the flange member 2200 in the radial direction of the axis is larger than the outer diameter of the main body 2100. The flange member 2200 has a disc shape centered around the second gas inlet/outlet 2210 and includes a flange coupling portion 2220 formed on the lower surface of this disc. The flange coupling portion 2220 is thermally welded to the upper side of the liner 1000, where the opening 1100 is formed, thereby securing the boss assembly 2000 to the liner 1000.

The boss assembly 2000 must maintain airtightness to prevent the leakage of high-pressure gas. Therefore, the connection between the main body 2100 and the flange member 2200 must be more than just a simple mechanical fit; it must be securely bonded to ensure airtightness. To achieve this, the boss assembly 2000 includes a concave-convex engagement portion 2300, which is provided on both the main body 2100 and the flange member 2200. Additionally, during the manufacturing process of the boss assembly 2000, a preheating method for the main body 2100 may be applied to enhance the bonding strength between the main body 2100 and the flange member 2200. Further details on this will be described later.

FIG. 4 is a sectional view illustrating the concave-convex engagement portion.

As shown in FIGS. 1 to 4, the concave-convex engagement portion 2300 includes multiple interlocking grooves 2310, which are formed in an arc shape around the axis on the lower surface of the main body 2100, and multiple interlocking ribs 2320, which are formed on the upper surface of the flange member 2200 and inserted into the corresponding interlocking grooves 2310. In this embodiment, the concave-convex engagement portion 2300 includes four interlocking grooves 2310 and four corresponding interlocking ribs 2320. However, the number, spacing, and relative positioning of the interlocking grooves 2310 and interlocking ribs 2320 are not limited to this embodiment. For example, a single interlocking groove 2310 and a single interlocking rib 2320 may be provided. When multiple interlocking grooves 2310 are included, they are arranged in a concentric pattern (see FIG. 4).

The lower surface of the main body 2100, where the interlocking grooves 2310 are formed, is not a flat surface; instead, certain areas are curved. Consequently, at least some of the interlocking grooves 2310 are recessed in different directions compared to the others. This design helps to distribute external forces that may act to separate the main body 2100 and the flange member 2200 within the boss assembly 2000, thereby enhancing the structural integrity of the connection.

The interlocking groove 2310 has a dovetail-shaped cross-section, where its width expands in the depth direction of the main body 2100, i.e., in the recessed direction. When the boss assembly 2000 is cross-sectioned along the axis, the interlocking groove 2310 appears as an inverted trapezoidal shape. The cross-section of the interlocking groove 2310 consists of an inner edge 2311 located in the depth direction of the main body 2100, an opening 2312 formed by the lower surface of the main body 2100, and two side edges 2313 connecting the inner edge 2311 to the opening 2312. Here, the width of the inner edge 2311 is greater than that of the opening 2312. This design enhances the bonding strength between the main body 2100 and the flange member 2200, ensuring a more secure connection.

Since the interlocking rib 2320 is designed to engage with the interlocking groove 2310, it is formed to correspond to the shape, dimensions, and positioning of the interlocking groove 2310.

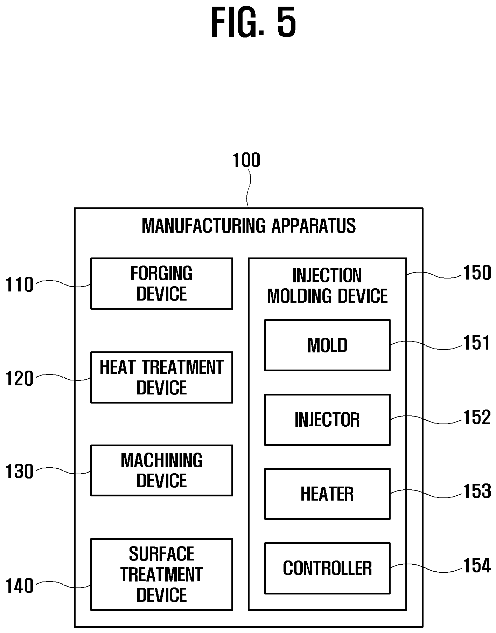

The specific dimensions of the interlocking groove 2310 can be adjusted based on design modifications and are not limited to fixed values. As an example, as shown in FIG. 5, when the maximum length of the boss assembly 2000 along the axis is 10.8 cm and its maximum diameter in the radial direction is 20.9 cm, the width of the inner edge 2311 is 4.44 cm, the width of the opening 2312 is 2.66 cm, and the gap between the inner edge 2311 and the opening 2312 is 1.54 cm. Additionally, the inner edge 2311 and the side edge 2313, as well as the opening 2312 and the side edge 2313, may be rounded. For example, they may be formed with a curvature of 0.3 cm in diameter.

The angle between the inner edge 2311 and the side edge 2313 is set within a range of 50 to 70 degrees. In other words, the angle of the side edge 2313 relative to the axis is set within a range of 20 to 40 degrees. If the angle of the side edge 2313 relative to the axis is less than 20 degrees, the bonding strength of the concave-convex engagement portion 2300 is reduced. Conversely, if the angle exceeds 40 degrees, areas where the injected resin does not reach may form during the injection molding process of the boss assembly 2000, as will be described later. The specified angle range is chosen to satisfy both the bonding strength requirements of the concave-convex engagement portion 2300 and the precision of the injection molding process for the flange member 2200.

Hereinafter, a method for manufacturing the boss assembly 2000 according to this embodiment will be described.

FIG. 5 is a block diagram of the manufacturing apparatus for the boss assembly.

As shown in FIGS. 1 to 5, the manufacturing apparatus 100 for producing the boss assembly 2000 includes a forging device 110, a heat treatment device 120, a machining device 130, a surface treatment device 140, and an injection molding device 150. In addition to the devices described in this embodiment, the manufacturing apparatus 100 may also include various other auxiliary devices and equipment necessary for the manufacturing process.

The forging device 110 forms the main body 2100 by forging an aluminum material. The forging device 110 performs the forging process by pressing a cylindrical aluminum material.

The heat treatment device 120 performs heat treatment on the forged main body 2100. For example, the heat treatment device 120 carries out a solution treatment to maintain the main body 2100 in a solid solution state at a temperature range of 500°C to 525°C, followed by water quenching to rapidly cool the main body 2100 using water. Additionally, it performs an aging treatment by maintaining the main body 2100 at a temperature range of 150°C to 180°C for 3 to 8.5 hours.

The machining device 130 includes polishing equipment, a three-dimensional measuring instrument, and a shape and roughness measuring instrument. The machining device 130 performs fine machining on the surface of the main body 2100 to achieve the required precise dimensions and shape.

The surface treatment device 140 performs surface treatment on the machined main body 2100. For example, the surface treatment device 140 includes an anodizing process facility. The surface treatment process may include a pretreatment process in which the main body 2100 is alternately immersed in alkaline and acidic solutions and then rinsed, a Triazine Thiol Sodium (TTN) electro-polymerization process in which the main body 2100 is immersed in a mixed solution of TTN and sulfuric acid and electrolyzed, and a drying process in which the main body 2100 is washed and dried.

The injection molding device 150 manufactures the boss assembly 2000 by forming the flange member 2200, which is bonded to the main body 2100, using PA6.

The injection molding device 150 includes a mold 151. The mold 151 is a metal mold designed with a cavity corresponding to the outer shape of the boss assembly 2000. In the molding process, the main body 2100 is placed inside this cavity, and liquid PA6 is injected and spread within the mold to form the flange member 2200, which bonds to the main body 2100. The specific shape or type of mold 151 is not limited. For example, the mold 151 may include a first mold fixed to the ground and a second mold that is movable relative to the first mold. When the first and second molds are joined to create the cavity, PA6 is injected. After PA6 solidifies, the second mold moves to separate the boss assembly 2000 from the mold 151.

The injection molding device 150 includes an injector 152. The injector 152 consists of a storage tank for holding liquid PA6, a flow channel that connects the storage tank to the mold, and a pump that transfers PA6 from the storage tank through the flow channel into the mold. The injector 152 operates under the control of a controller 154, injecting the required amount of PA6 into the cavity of the mold 151.

The injection molding device 150 includes a heater 153. The heater 153 preheats the main body 2100 to a predetermined temperature range before it is placed into the mold 151. Additionally, the heater 153 is provided in both the injector 152 and the mold 151 to control and maintain the mold 151 at a regulated temperature. The specific preheating temperature range for the main body 2100 using the heater 153 will be described later.

The injection molding device 150 includes a controller 154. The controller 154 is implemented using hardware circuits such as a microprocessor, microcontroller, or chipset. It directs and controls various operations of the injection molding device 150, including the activation of the heater 153 and the injector 152.

Hereinafter, a detailed description of the method for manufacturing the boss assembly 2000 using the manufacturing apparatus 100 will be provided.

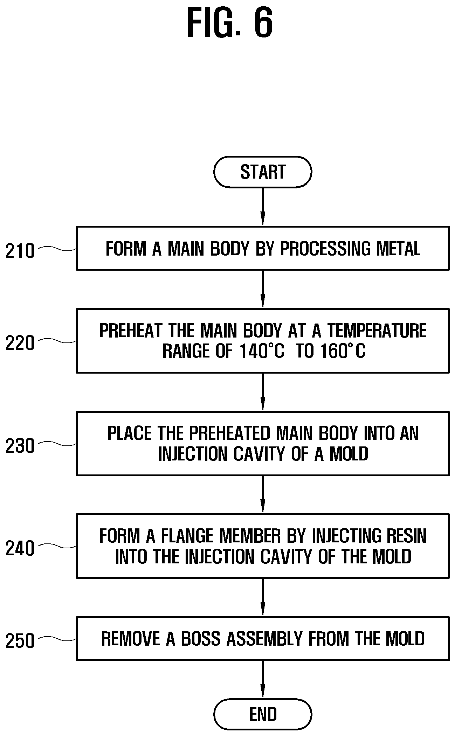

FIG. 6 is a flowchart illustrating the method of manufacturing the boss assembly using the manufacturing apparatus.

As shown in FIGS. 1 to 6, in step 210, the manufacturing apparatus 100 processes a metal, such as aluminum, to form the main body 2100. Step 210 is performed by the subordinate devices of the manufacturing apparatus 100, including the forging device 110, heat treatment device 120, machining device 130, and surface treatment device 140.

In step 220, the manufacturing apparatus 100 controls the heater 153 to preheat the main body 2100 at a temperature range of 140°C to 160°C. The processes following step 220 are carried out by the injection molding device 150, which is one of the subordinate devices of the manufacturing apparatus 100.

In step 230, the manufacturing apparatus 100 places the preheated main body 2100 into the injection cavity of the mold 151. At this stage, the manufacturing apparatus 100 controls the heater 153 to preheat the mold 151 to a temperature range of, for example, 80°C to 90°C.

In step 240, the manufacturing apparatus 100 injects a resin, such as PA6, into the injection cavity of the mold 151 to form the flange member 2200.

In step 250, the manufacturing apparatus 100 removes the boss assembly 2000 from the mold 151.

Through this process, the manufacturing apparatus 100 produces the boss assembly 2000, in which the main body 2100 and the flange member 2200 are bonded using a dissimilar material joining technique.

The main body 2100 can be made from various metal materials in addition to aluminum, and the flange member 2200 can also be made from various resins other than PA6, such as PA66, PA12, PA13, PA63, and PA6C, which are different types of engineering plastics. However, the preheating temperature range in step 220 is set to be 30% to 40% lower than the melting point of the resin material used for the flange member 2200. When the resin is injected into the injection cavity of the mold 151, the inserted main body 2100, due to its metallic nature, affects the solidification of the resin in the cavity (particularly because aluminum has a high thermal conductivity). This ultimately influences the bonding strength between the main body 2100 and the flange member 2200. To ensure strong bonding, the main body 2100 is preheated within the appropriate temperature range, considering the melting point of the resin, before being placed into the mold 151. The resin is then injected, securing the required bonding strength.

For example, if the resin used is PA6, its melting point is 225°C. Since 40% of 225°C is 90°C and 30% is 68°C, the preheating temperature range for the main body 2100 is calculated as (225 - 90) = 135°C to (225 - 68) = 157°C, which is approximately 140°C to 160°C.

For example, if the resin used is PA66, its melting point is 260°C. Since 40% of 260°C is 104°C and 30% is 78°C, the preheating temperature range for the main body 2100 is calculated as (260 - 104) = 156°C to (260 - 78) = 182°C, which is approximately 160°C to 180°C.

For example, if the resin used is PA12, its melting point is 180°C. Since 40% of 180°C is 72°C and 30% is 54°C, the preheating temperature range for the main body 2100 is calculated as (180 - 72) = 108°C to (180 - 54) = 126°C, which is approximately 110°C to 130°C.

Following the same principle, the preheating temperature range for the main body 2100 can be determined when using other types of engineering plastics as well.

Meanwhile, when forming the flange member 2200 using PA6, consider a comparison of preheating temperatures set at 130°C, 150°C, 180°C, and 200°C. At the time of manufacturing, all four cases show no visible differences in appearance. However, after approximately 24 hours, differences begin to emerge depending on the preheating temperature. In the 130°C case, delamination occurs, causing the flange member 2200 to separate from the main body 2100. In the 180°C and 200°C cases, shrinkage of PA6 reduces the adhesion strength of the flange member 2200 to the main body 2100, leading to hydrogen leakage. In contrast, in the 150°C case, the main body 2100 and the flange member 2200 maintain proper adhesion, and no hydrogen leakage occurs.

In this manner, the manufacturing apparatus 100 can control the preheating temperature range of the main body 2100 based on the material of the flange member 2200. This ensures the production of a boss assembly 2000 with enhanced adhesion strength between the main body 2100 and the flange member 2200.

## Claims

1. A boss assembly coupled to an opening of a liner of a gas storage container along a longitudinal axis of the gas storage container, comprising:
a main body made of a metal material, having a first gas inlet/outlet extending along the longitudinal axis;
a flange member made of a resin material, coupled to the main body, having a second gas inlet/outlet arranged on the longitudinal axis to communicate with the first gas inlet/outlet and a flange coupling portion joined to the liner; and
a concave-convex engagement portion including an interlocking groove formed in an arc shape on the main body and an interlocking rib, formed on the flange member, inserted into and engaged with the interlocking groove.

2. The boss assembly according to claim 1, wherein the interlocking groove has a dovetail-shaped cross-section, a width of which expands in a depth direction of the main body.

3. The boss assembly according to claim 2, wherein a side edge of the cross-section of the interlocking groove extends at an angle in a range of 20 degrees to 40 degrees relative to an axis of the depth direction.

4. A gas storage container comprising:
a liner having an opening provided on one side along a longitudinal axis; and
a boss assembly coupled to the opening of the liner, wherein the boss assembly includes:
a main body made of a metal material, having a first gas inlet/outlet extending along the longitudinal axis;
a flange member made of a resin material, coupled to the main body, having a second gas inlet/outlet arranged on the longitudinal axis to communicate with the first gas inlet/outlet and a flange coupling portion joined to the liner; and
a concave-convex engagement portion including an interlocking groove formed in an arc shape on the main body and an interlocking rib, formed on the flange member, inserted into and engaged with the interlocking groove.

5. A method for manufacturing a boss assembly coupled to an opening of a liner of a gas storage container along a longitudinal axis of the gas storage container, the method comprising:
forming a main body by processing a metal to have a first gas inlet/outlet extending along the longitudinal axis;
preheating the main body at a temperature range of 140°C to 160°C and placing the preheated main body into an injection cavity of a mold; and
injecting a resin into the injection cavity of the mold to form a flange member, which is coupled to the main body and has a second gas inlet/outlet arranged on the longitudinal axis to communicate with the first gas inlet/outlet.

6. The method according to claim 5, wherein the metal comprises aluminum, and the resin comprises PA6 (Polyamide 6).

7. The method according to claim 5, wherein the preheating temperature range of the main body is set to be 30% to 40% lower than the melting point of the resin.
